# EUROPEAN PATENT APPLICATION

(11) **EP 0 676 747 A2**
(43) Date of publication of application: **11.10.1995**
(21) Application number: 95105202.6
(22) Date of filing: 06.04.1995
(51) Int. Cl.: G11B 5/39

(54) **Magnetoresistive transducer having insulating oxide exchange layer**

(30) Priority: 07.04.1994 US 224598
(71) Applicant: READ-RITE CORPORATION, Milpitas California 95035 (US)
(72) Inventor: Shen, Yong, Milpitas, California 95035 (US); Cain, William Charles, San Jose, California 95123 (US); Tong, Hua-Ching, San Jose, California 95120 (US)
(74) Representative: Körber, Wolfhart, Dr. rer.nat.

(57) **Abstract**

A magnetoresistive read transducer having an exchange layer (14, 26) formed from an antiferromagnetic insulation metal oxide. The preferred exchange materials include cobalt oxide (CoO), nickel oxide (NiO), cobalt oxide/nickel oxide alloys, cobalt nickel oxide (CoNiO), α-iron oxide (α-Fe2o3), and mixtures thereof.

## Description

### FIELD OF INVENTION

This invention relates to magnetoresistive read transducers having antiferromagnetic exchange layers for longitudinal biasing to prevent Barkhausen noise, and in particular to the oxide exchange layers of magnetoresistive transducers.

### BACKGROUND OF THE INVENTION

Magnetoresistive (MR) read transducers convert information stored on magnetic media into electrical signals. MR heads sense magnetic field signals at high linear densities by the resistance change of the MR reading element due to change in magnetization state resulting from changes in the sensed magnetic field.

One problem which arises in the use of MR transducers is the discontinuous change in sensitivity and linearity in the outputs of the transducer. This is more commonly known as "Barkhausen noise". Barkhausen noise originates from the irregular motion of domain walls and has been reduced by the application of a longitudinal bias field. A longitudinal bias field aligns the magnetization thereby creating a single domain state.

U.S. Patent No. 4,103,315 discloses a method of inducing longitudinal bias involving antiferromagnetic-ferromagnetic coupling. In this patent, an exchange layer is positioned over the entire length of the MR sensor. An improvement in longitudinal biasing was described in U. S. Patent No. 4,663,685, in which the MR sensor was longitudinally biased only in the inactive end regions and not in a central active region.

The use of transition element metallic alloys in exchange layers is now well known. Iron manganese (FeMn) alloys are commonly used as antiferromagnetic materials in MR exchange bias films. However, problems have arisen with the corrosion of such exchange layers. Thus, there is a need for MR transducers having exchange layers producing sufficient longitudinal bias while having improved corrosion resistance.

### SUMMARY OF THE INVENTION

An object of this invention is to provide materials having good corrosion resistance and longitudinal biasing properties.

Another object of this invention is to reduce Barkhausen noise in magnetoresistive read transducers, while reducing susceptibility to corrosion.

Another object of this invention is to provide a method of producing MR transducers that have minimal near zero levels Barkhausen noise and reduced susceptability to corrosion.

One embodiment of the invention relates to a magnetoresistive read transducer having an exchange layer including an antiferromagnetic oxide. The exchange layer is preferably composed of one of the following oxides or mixtures: nickel oxide (NiO), cobalt oxide (CoO), a cobalt nickel oxide (CoNiO) and CoO/NiO multilayers. A preferred MR transducer includes a MR sensor layer positioned adjacent a substrate layer, an antiferromagnetic oxide exchange layer(s) positioned adjacent to the MR sensor layer in the inactive end regions, and conductive lead layers positioned adjacent to the exchange layers and in electrical contact with the MR sensor layer. The central active region of the transducer is substantially free of exchange material or lead material.

Another embodiment of the invention relates to a method of minimizing corrosion in exchange layers of MR read transducers. The preferred method involves forming a MR sensor layer in a central active region on a suitable substrate. The method further involves forming two antiferromagnetic oxide exchange layers in the inactive end regions, each partially overlapping an edge of the MR sensor layer, while maintaining a central region of the MR sensor free of exchange material. Conductive lead layers are formed adjacent to the exchange layers and in electrical contact with the MR sensor layer within or near the central active region, while maintaining a central region of the MR sensor free of lead material.

### BRIEF DESCRIPTION OF THE DRAWINGS

FIG. 1 shows a sectional view of a magnetoresistive read transducer.

FIG. 2 shows a sectional view of an alternative MR read transducer.

FIG. 3 shows a plan view of the MR read transducer of FIG. 1.

FIG. 4 shows a sectional view of an alternative MR read transducer.

FIG. 5 shows a sectional exploded view of a trilayer magnetoresistive sensor layer of an MR read transducer.

### DETAILED DESCRIPTION OF THE PREFERRED EMBODIMENTS

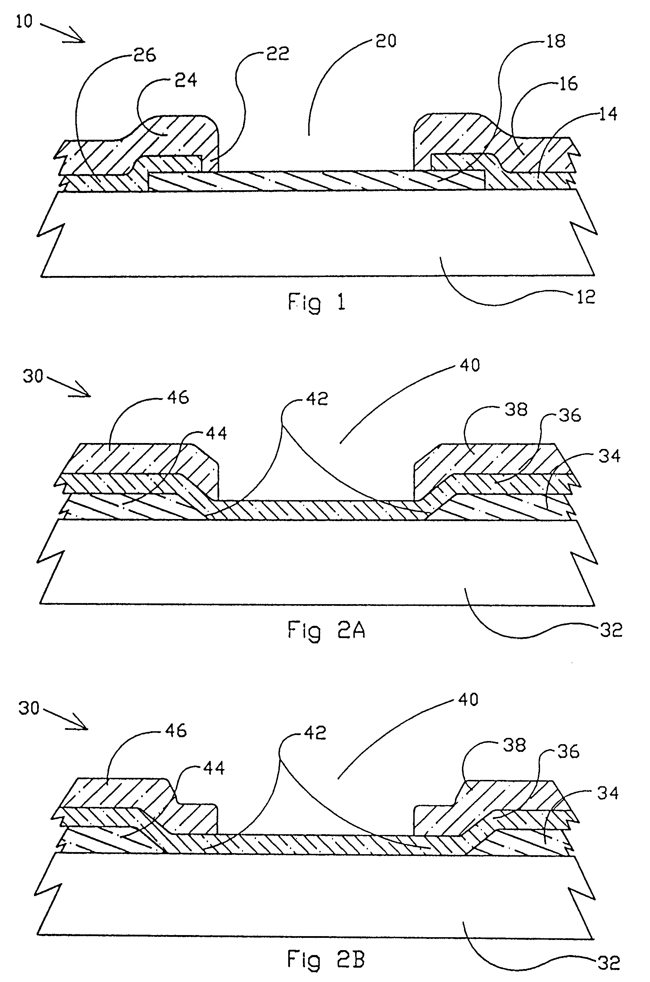

With reference to FIG. 1, the structure of a preferred MR read transducer 10 includes an MR sensor layer 18 that is centrally located on the substrate layer 12, defining a central active region 20 of the MR transducer 10. Exchange layers 14 and 26 are positioned adjacent to the substrate layer 12 in inactive end regions of the transducer 10. The exchange layers 14 and 26 contact the edge regions of the MR sensor layer 18 but do not extend completely through the active region 20. Electrically conductive leads 16 and 24 are positioned adjacent to exchange layers 14 and 26 in the inactive end regions. Lead layers 16 and 24 also make electrical contact with the edge regions of the MR sensor layer 18 but do not extend completely through the active region 20. The lead layers preferably range from about 500 to about 3000 Angstroms in thickness.

The MR sensor layer may have a single layer of structure composed of an alloy of nickel and iron (NiFe) or a trilayer structure. FIG. 5 illustrates a trilayer MR sensor 90 in an exploded sectional view. The MR sensor 90 comprises a non-magnetic spacer layer 94 positioned between a NiFe layer 92 and a soft active layer 96 (SAL) which provides transverse bias for the sensor. The pattern of MR sensor layer may be formed by different processes, such as ion-milling or lift-off processes. The thickness of the MR sensor layer may vary, depending upon the application, from about 50 to about 900 Angstroms, and preferably from about 100 to about 700 Angstroms.

The exchange layers of the present invention are advantageously formed of an corrosion-resistant antiferromagnetic insulating oxide material, which is an improvement over the iron-manganese (FeMn) alloys of the prior art. The preferred exchange materials include cobalt nickel oxide (CoNiO), multilayers of cobalt oxide and nickel oxide (CoO/NiO). The thickness of the exchange layers may vary, depending upon the specific application, but preferably range from about 100 to 500 Angstroms. While the exchange layers may be patterned by various methods, the preferred methods are lift-off processes or etching processes.

FIG. 2 illustrates an alternative embodiment of an MR transducer 30 of the instant invention. In this embodiment, the exchange layers 34 and 44 are positioned between the MR sensor layer 36 and substrate 32 in the inactive end regions. Lead layers 38 and 46 are positioned adjacent to the MR sensor layer 36 on the side opposite the exchange layers 34 and 44 in the inactive end regions. Intimate contact is established between the inactive regions of the MR sensor layer 36 and the exchange layers to provide longitudinal bias. In this embodiment, the exchangelayers 34 and 44 are tapered near the active region in order to minimize the non-planarizing effect on MR domain structures. The tapered angle 42 of the exchange layers, i.e., the angle between the substrate layer 32 and the exchange layer 34 or 44, may vary somewhat, but preferably ranges from about 15° to about 60°. The edges of the lead pattterns near the MR active region should be either aligned with the edges of exchange layers shown in FIG. 2a or extended over the edge of exchange layer toward the active region shown in FIG. 2b. In the configuration of FIG. 2a, the active region of MR sensor is defined by exchange and leads. On the other hand, the active region in the configuration of FIG. 2b is primarily defined by leads.

In this embodiment, the MR sensor may have a single layer structure or a trilayer structure. If the trilayer is used for the MR sensor, the NiFe layer 92 is first formed with the end region in direct contact with the exchange layers 44 and 34 and followed by nonmagnetic spacer 94 and trasverse bias layer 96.

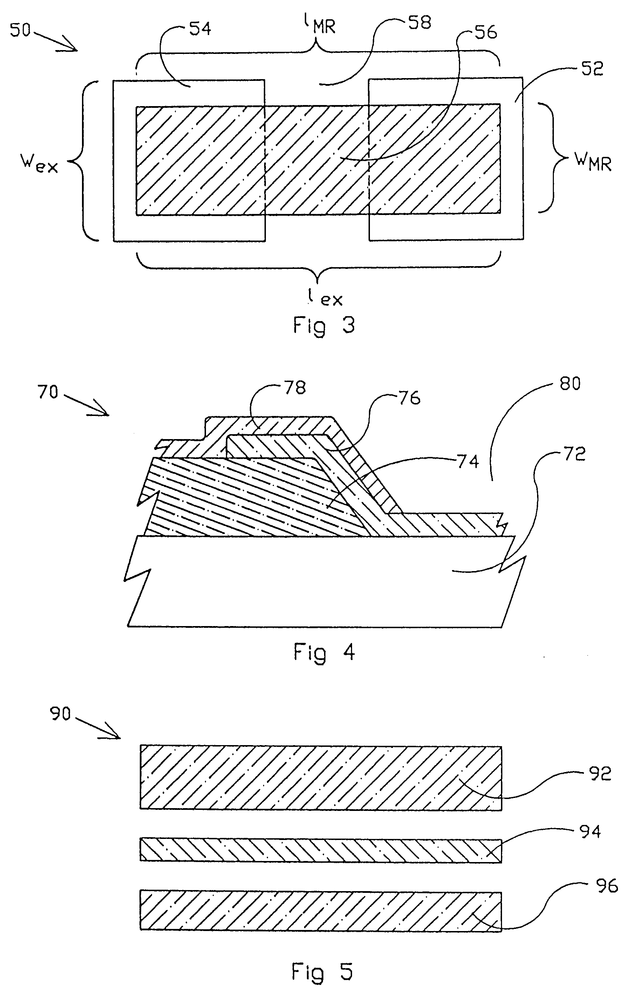

FIG. 3 shows a plan view of the MR transducer 50, depicting the relative positioning and sizes of the MR sensor layer 56 and the exchange layers 52 and 54. The central active region 58 is defined by the absence of exchange layer or lead layers, i.e., one face of the MR sensor layer 56 is in intimate contact with the substrate layer and the other face is exposed. Preferably, the central active region 58 ranges from about 1 to about 5 microns. The dimensions of the exchange layers 52 and 54 may vary somewhat. However, the overall length (lex) and width (wex) of the exchange layers must be sufficient to allow the exchange layer to extend beyond the MR sensor layer on the three sides not facing the central active region. Preferably, the overall length (lex) of the exchange layer is at least two microns greater than the length (lex) of the MR sensor layer. Similarily, the widths (Wex) of the exchange layers are preferably at least two microns greater than the width (Wex) of the MR sensor layer.

FIG. 4 shows a sectional view of one half of another alternative MR read transducer structure 70. In this embodiment, the lead layer 74 is positioned between the MR sensor layer 76 and the substrate layer 72. The exchange layer 78 is positioned adjacent the MR sensor layer 76 on the side opposite the lead layer 74. As discussed in the previous embodiments, the MR sensor layer 76 is preferably substantially centrally located on the substrate layer 72. Also as discussed in the aforementioned embodiments, the exchange layer 78 and lead layer 74 contact the MR sensor layer 76 without extending into the central active region 80 of the transducer 70. While this invention has been described in detail with reference to preferred embodiments, those having skill in the art will recognize that many details may be varied without departing from the spirit and scope of the present invention.

## Claims

1. A magnetoresistive read transducer including an exchange layer (14, 26), said exchange layer (14, 26) comprising an insulating antiferromagnetic metal oxide material.

2. A transducer as recited in claim 1, wherein said metal oxide material is selected from the group consisting of cobalt oxide (CoO), nickel oxide (NiO), cobalt oxide/nickel oxide multilayers, cobalt nickel oxide (CoNiO), α-iron oxide (α-Fe₂O₃), and mixtures thereof.

3. A transducer as recited in claim 1 or 2, wherein said exchange layer (14, 26) is 100 to 500 Angstroms in thickness.

4. A transducer as recited in claim 1, 2 or 3, further comprising:
a) a substrate (12);
b) a magnetoresistive sensor layer (18), positioned adjacent to said substrate in a central active region of said transducer;
c) two insulating antiferromagnetic metal oxide exchange layers positioned adjacent to said substrate in inactive end regions, each of said exchange layers being in intimate atomic contact with a proximal end of said magnetoresistive sensor layer (18); and
d) two electrically conductive lead layers (16, 24), each positioned adjacent to one of said exchange layers (14, 26) in said inactive end regions, each of said lead layers (16, 24) being in electrical contact with a proximal end of said magnetoresistive sensor layer (18).

5. A transducer as recited in any one of the preceding claims, wherein said exchange layer (14, 26) is tapered at a central active region of said transducer.

6. A transducer as recited in claim 5, wherein the angle of taper is about 15 to about 60 degrees.

7. A transducer as recited in claim 4 or 5, wherein said magnetoresistive sensor layer (18) is positioned between said exchange layers and said substrate (12) at areas of overlap.

8. A transducer as recited in claim 4 or 5, wherein said magnetoresistive sensor layer (18) is positioned between said exchange layers and said lead layers (16, 24) at areas of overlap.

9. A transducer as recited in claim 8, wherein said exchange layers (14, 26) are positioned between said magnetoresisitve sensor layer (18) and said substrate (12) at areas of overlap.

10. A transducer as recited in claim 8, wherein said lead layers (16, 24) are positioned between said magnetoresistive sensor layer (18) and said substrate (12) at areas of overlap.

11. A method of forming a magnetoresistive read transducer, comprising the steps of:
a) forming a magnetoresistive sensor layer (18) on a substrate (12), thereby defining a central magnetoresistively active region of said tranducer;
b) forming two antiferromagnetic insulating oxide exchange layers (14, 26) in inactive end regions of said tranducer, whereby each of said exchange layers is in intimate exchange ("atomic") contact with a proximal portion of said sensor layer (18); and
c) forming two electrically-conductive lead layers (16, 24) in said inactive end regions, whereby each of said lead layers (16, 24) is in intimate electrical contact with a proximal portion of said sensor layer (18).

12. A method as recited in claim 11, wherein said oxide material is selected from the group consisting of cobalt oxide (CoO), cobalt oxide/nickel oxide multilayers, cobalt nickel oxide (CoNiO), α-iron oxide (α-Fe₂O₃), and mixtures thereof.

13. A method as recited in claim 11 or 12, further comprising forming said exchange layers such that the thickness of said exchange layers is substantially uniform in said inactive end regions while the thickness gradually decreases in the area of contact with said magnetoresistive sensor layer (18).

14. A method of reducing the corrosion in the exchange layer (14, 26) of a magnetoresisitive read transducer, comprising the step of forming the exchange layer (14, 26) from antiferromagnetic insulating oxide material.

15. A method as recited in claim 14, wherein said oxide material is selected from the group consisting of cobalt oxide (CoO), nickel oxide (NiO), cobalt oxide/nickel oxide multilayers, cobalt nickel oxide (CoNiO), α-iron oxide (α -Fe₂O₃), and mixtures thereof.
